# EUROPEAN PATENT SPECIFICATION

(11) **EP 2 802 908 B1**
(45) Date of publication and mention of the grant of the patent: **24.10.2018**
(21) Application number: 12805917.7
(22) Date of filing: 06.11.2012
(51) Int. Cl.: G02B 6/00, F21S 41/24, F21S 41/29, F21V 8/00

(54) **Motor vehicle headlight comprising a light guide**
Kraftfahrzeugscheinwerfer mit einem Lichtleiter
Projecteur de véhicule avec un guide de lumière

(30) Priority: 11.01.2012 CZ 20120013
(43) Date of publication of application: 19.11.2014
(73) Proprietor: Skoda Auto A.S., 293 60 Mladá Boleslav (CZ)
(72) Inventor: TRUHLAR Jan, CZ-PSC 512 36 (CZ)
(86) International application number: PCT/CZ2012/000113
(87) International publication number: WO 2013/104345

(56) References cited:
- EP-A1- 2 169 296
- EP-A2- 1 342 617
- WO-A1-2012/059852
- DE-A1- 19 826 833
- DE-U- 1 995 520
- DE-U1- 29 702 746
- DE-U1-202009 010 837
- US-A1- 2003 169 997
- US-A1- 2010 053 987

## Description

### Technical field

The invention comprises a motor vehicle headlight powered by LEDs comprising a light guide.

### Background of the invention

For lighting of the motor vehicles are currently used light guides, which are powered by LEDs. This solution leads to a cost reduction because a small number of LEDs can be used in implementation of the signal functions. However, fastening of the light guide in the standard headlights presents a problem caused by a high demand for fit of the visual parts of the motor vehicle's exterior. Another problem is a demand for minimizing contact areas between the light guide and other components of the headlight, because the contact areas absorb the light that passes through the light guide, thus affecting the photometric output of the system and homogeneity of the emitted light.

Various forms of lugs are presently used for fastening the light guide in the headlights. The lugs are distributed along the length of the headlight so that the light guide.can be fixed in the motor vehicle's headlight. The problem is that the light guide may not accurately fit with the other components, which are distant from the fastening points. Another problem is the fact that it is very difficult to conceal the lugs used for the fastening, which has a negative influence when assessing the homogeneity.

Another state of the art can be seen in the document US 2010/053987 A1. It discloses the light guide in the motor vehicle headlight powered by LEDs, made of a clear transparent material and fitted with a fastening section in the form of a lengthwise fastening rib, which is located along more than one half of the length of the light guide.

This solution is lacking reliable and effective securing the delimitation of position of the light guide in the x-axis and y-axis.

### Summary of the invention

The drawbacks of the existing solutions are eliminated by invention, which comprise a motor vehicle headlight powered by LEDs comprising a light guide. The light guide is made of a clear transparent material such as PC or PMMA, fitted with a fastening section and powered by LEDs. PC is a polycarbonate and PMMA is a polymethyl acrylate i.e. a thermoplastic. The essence of the invention involves attachment of the light guide in standard headlights by a lengthwise fastening rib. This rib is located along more than one half of the length of the light guide and is also made of a clear transparent material such as PC or PMMA.

The light guide is fixed by the lengthwise fastening rib. The lengthwise fastening rib is gripped between a front cover of a non-transparent glossy galvanized or non-galvanized material such as PC or ABS and a rear cover made of a non-transparent matt galvanized or non-galvanized material such as PC or ABS. ABS is acrylonitrile butadiene styrene, which is a thermoplastic. Gripping of the fastening rib between the front and rear cover delimits the position of the light guide in the x-axis. The bottom edge of the light guide fits closely to the internal surface of the rear cover, thus securing the delimitation of position of the light guide in the y-axis. The front and the rear covers are connected together by any standard method such as screw connections, pawls, etc.

If the motor vehicle headlight is equipped with a cover filter of a clear or matt transparent material such as PC or PMMA and is gripped between the front and the rear cover, then the light guide is fixed by the lengthwise fastening rib between this cover filter and the rear cover. This secures the delimitation of position of the light guide in the x-axis. The bottom edge of the light guide fits closely to the internal surface of the rear cover, thus securing the delimitation of position of the light guide in the y-axis. The front and the rear covers are connected together by any standard method such as screw connections, pawls, etc.

### Brief description of the drawings

The invention is clearly explained by schematic drawings; Fig. 1 illustrates the light guide as an example of the current solution of the light guide fastening, Fig. 2 illustrates the light guide fixed by a lengthwise fastening rib, Fig. 3 illustrates fastening of the light guide in the headlight in a cross-section and Fig. 4 also illustrates fastening of the light guide in a cross-section, but the headlight is fitted with a cover filter.

### Detailed description of the invention

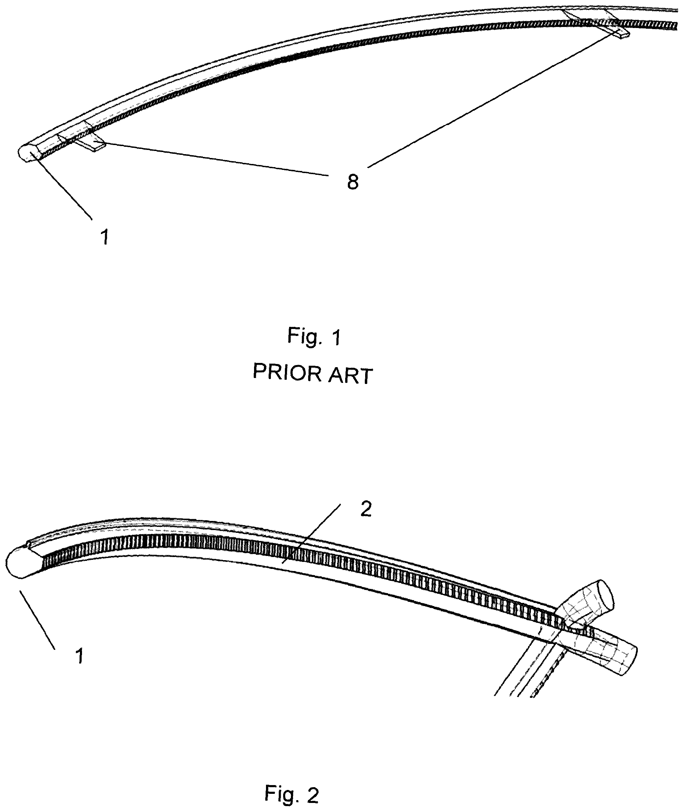

The technical solution of the light guide 1 according to the invention is illustrated in Fig. 2, where the light guide 1 is illustrated with the lengthwise fastening rib 2, which is located along more than one half of the length of the light guide 1 and is made of a clear transparent PC or PMMA material, just like the light guide 1.

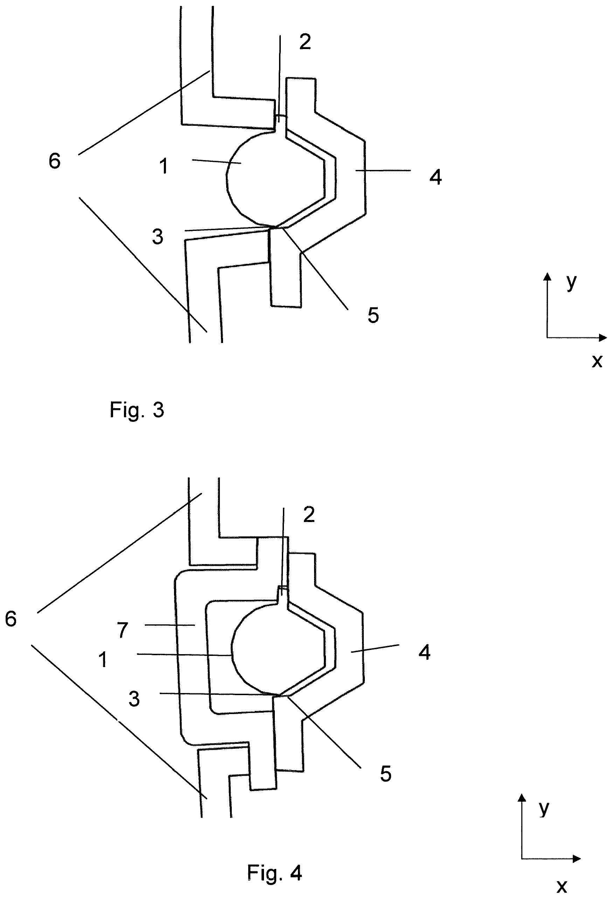

Fixing of the light guide 1 by the lengthwise fastening rib 2 in the motor vehicle headlight is illustrated in a cross-section in Fig. 3. The lengthwise fastening rib 2 is gripped between the front cover 6 and the rear cover 4. The front cover 6 and the rear cover 4 are connected by any standard method (screw connections, pawls, etc.). This fixing of the lengthwise fastening rib 2 secures the delimitation of position of the light guide 1 in the x-axis. The bottom edge 3 of the light guide 1 fits closely to the internal surface of the rear cover 5, thus securing the delimitation of position of the light guide 1 in the y-axis.

Another example of the design is illustrated in a cross-section in Fig. 4, where the headlight is fitted with a cover filter 7. The lengthwise fastening rib 2 is gripped between the cover filter 7 and the rear cover 4. The cover filter 7 is gripped between the front cover 6 and the rear cover 4, which are connected by any standard method (screw connections, pawls, etc.). This fixing of the lengthwise fastening rib 2 secures the delimitation of position of the light guide 1 in the x-axis. The bottom edge 3 of the light guide 1 fits to the internal surface of the rear cover 5, thus securing the delimitation of position of the light guide 1 in the y-axis.

Both mentioned examples of fastening ensure better fit of the components and also don't cause local non-homogeneity when the motor vehicle's headlights are on.

## Claims

1. Motor vehicle headlight powered by LEDs comprising a light guide (1), which is made of a clear transparent material and fitted with a fastening section in the form of a lengthwise fastening rib (2), which is located along more than one half of the length of the light guide (1),
**characterised in that**
the light guide (1) is fixed by the lengthwise fastening rib (2) in the motor vehicle headlight, whereas for fixing the light guide (1) in the motor vehicle headlight the lengthwise fastening rib (2) is gripped in the motor vehicle headlight between a front cover (6) and a rear cover (4), thus securing the delimitation of position of the light guide (1) within the motor vehicle headlight in a first direction, whereas a bottom edge (3) of the light guide (1) is leaning against an inner surface of the rear cover (5), thus securing the delimitation of position of the light guide (1) within the motor vehicle headlight in a second direction, which extends perpendicular to the first direction, whereas the front cover (6) and the rear cover (4) are connected together by screw connections or pawls.

2. Motor vehicle headlight of claim 1, whereas the front cover (6) is in contact with a surface of the lengthwise fastening rib (2) and the rear cover (4) is in contact with another surface of the lengthwise fastening rib (2).

3. Motor vehicle headlight powered by LEDs comprising a light guide (1), which is made of a clear transparent material and fitted with a fastening section in the form of a lengthwise fastening rib (2), which is located along more than one half of the length of the light guide (1),
**characterised in that**
the lengthwise fastening rib (2) that is gripped in the motor vehicle headlight between a cover filter (7) and a rear cover (4) and the cover filter (7) is gripped between a front cover (6) and the rear cover (4), thus securing the delimitation of position of the light guide (1) within the motor vehicle headlight in in a first direction, whereas a bottom edge (3) of the light guide (1) is leaning against an inner surface of the rear cover (5), thus securing the delimitation of position of the light guide (1) within the motor vehicle headlight in a second direction, which extends perpendicular to the first direction, whereas the front cover (6) and the rear cover (4) are connected together by screw connections or pawls.

4. Motor vehicle headlight of claim 3, whereas the cover filter (7) is in contact with a surface of the lengthwise fastening rib (2) and the rear cover (4) is in contact with another surface of the lengthwise fastening rib (2).

## Patentansprüche

1. Kraftfahrzeug-Frontscheinwerfer, betrieben durch LED, die einen Lichtleiter (1) umfassen, bestehend aus einem klaren, transparenten Material und mit einem Befestigungsabschnitt in Form einer Längsbefestigungsrippe (2) eingepasst, die an mehr als der Hälfte der Länge des Lichtleiters (1) angeordnet ist,
**dadurch gekennzeichnet, dass**
der Lichtleiter (1) durch die Längsbefestigungsrippe (2) in dem Kraftfahrzeug-Frontscheinwerfer fixiert ist, wobei die Längsbefestigungsrippe (2) zwecks Fixierung des Lichtleiters (1) in dem Kraftfahrzeug-Frontscheinwerfer zwischen einer vorderen Abdeckung (6) und einer hinteren Abdeckung (4) eingespannt ist, wodurch die Begrenzung der Position des Lichtleiters (1) in dem Kraftfahrzeug-Frontscheinwerfer in einer ersten Richtung sichergestellt ist, wobei eine Unterkante (3) des Lichtleiters (1) an einer Innenfläche der hinteren Abdeckung (5) lehnt, wodurch die Begrenzung der Position des Lichtleiters (1) in dem Kraftfahrzeug-Frontscheinwerfer in einer zweiten Richtung sichergestellt ist, die sich senkrecht zur ersten Richtung erstreckt, wobei die vordere Abdeckung (6) und die hintere Abdeckung (4) durch Schraubverbindungen oder Sperrklinken miteinander verbunden sind.

2. Kraftfahrzeug-Frontscheinwerfer nach Anspruch 1, wobei die vordere Abdeckung (6) in Kontakt mit einer Oberfläche der Längsbefestigungsrippe (2) steht und die hintere Abdeckung (4) in Kontakt mit einer anderen Oberfläche der Längsbefestigungsrippe (2) steht.

3. Kraftfahrzeug-Frontscheinwerfer, betrieben durch LED, die einen Lichtleiter (1) umfassen, bestehend aus einem klaren, transparenten Material und mit einem Befestigungsabschnitt in Form einer Längsbefestigungsrippe (2) eingepasst, die an mehr als der Hälfte der Länge des Lichtleiters (1) angeordnet ist,
**dadurch gekennzeichnet, dass**
die Längsbefestigungsrippe (2), die in dem Kraftfahrzeug-Frontscheinwerfer zwischen einem Abdeckungsfilter (7) und einer hinteren Abdeckung (4) und dem Abdeckungsfilter (7) eingespannt ist, zwischen einer vorderen Abdeckung (6) und der hinteren Abdeckung (4) eingespannt ist, wodurch die Begrenzung der Position des Lichtleiters (1) in dem Kraftfahrzeug-Frontscheinwerfer in einer ersten Richtung sichergestellt ist, wobei eine Unterkante (3) des Lichtleiters (1) an einer Innenfläche der hinteren Abdeckung (5) lehnt, wodurch die Begrenzung der Position des Lichtleiters (1) in dem Kraftfahrzeug-Frontscheinwerfer in einer zweiten Richtung sichergestellt ist, die sich senkrecht zur ersten Richtung erstreckt, wobei die vordere Abdeckung (6) und die hintere Abdeckung (4) durch Schraubverbindungen oder Sperrklinken miteinander verbunden sind.

4. Kraftfahrzeug-Frontscheinwerfer nach Anspruch 3, wobei der Abdeckungsfilter (7) in Kontakt mit einer Oberfläche der Längsbefestigungsrippe (2) steht und die hintere Abdeckung (4) in Kontakt mit einer anderen Oberfläche der Längsbefestigungsrippe (2) steht.

## Revendications

1. Phare de véhicule à moteur alimenté par des LED, comprenant un guide de lumière (1) qui est réalisé dans un matériau transparent clair et muni d'un tronçon de fixation sous forme de nervure de fixation (2) en longueur qui est située le long de plus d'une moitié de la longueur du guide de lumière (1),
**caractérisé en ce que**
le guide de lumière (1) est fixé par la nervure de fixation (2) en longueur dans le phase du véhicule à moteur, la nervure de fixation (2) en longueur étant, pour fixer le guide de lumière (1) dans le phare du véhicule à moteur, serrée dans le phare du véhicule à moteur entre un couvercle avant (6) et un couvercle arrière (4), bloquant ainsi la délimitation de position du guide de lumière (1) à l'intérieur du phare de véhicule à moteur dans une première direction, un bord inférieur (3) du guide de lumière (1) s'appuyant contre une surface intérieure du couvercle arrière (5), bloquant ainsi la délimitation de position du guide de lumière (1) à l'intérieur du phare de véhicule à moteur dans une deuxième direction qui s'étend perpendiculairement à la première direction, le couvercle avant (6) et le couvercle arrière (4) étant raccordés l'un à l'autre par des raccordements vissés ou des cliquets.

2. Phare du véhicule à moteur selon la revendication 1, le couvercle avant (6) étant en contact avec une surface de la nervure de fixation (2) en longueur, et le couvercle arrière (4) étant en contact avec une autre surface de la nervure de fixation (2) en longueur.

3. Phare de véhicule à moteur alimenté par des LED, comprenant un guide de lumière (1) qui est réalisé dans un matériau transparent clair et muni d'un tronçon de fixation sous forme de nervure de fixation (2) en longueur qui est située le long de plus d'une moitié de la longueur du guide de lumière (1),
**caractérisé en ce que**
la nervure de fixation (2) en longueur qui est serrée dans le phare du véhicule à moteur entre un filtre de couvercle (7) et un couvercle arrière (4) et le filtre de couvercle (7) est serrée entre un couvercle avant (6) et le couvercle arrière (4), bloquant ainsi la délimitation de position du guide de lumière (1) à l'intérieur du phare du véhicule à moteur dans une première direction, tandis qu'un bord inférieur (3) du guide de lumière (1) s'appuie contre une surface intérieure du couvercle arrière (5), bloquant ainsi la délimitation de position du guide de lumière (1) à l'intérieur du phare du véhicule à moteur dans une deuxième direction qui s'étend perpendiculairement à la première direction, le couvercle avant (6) et le couvercle arrière (4) étant raccordés l'un à l'autre par des raccordements vissés ou des cliquets.

4. Phare de véhicule à moteur selon la revendication 3, le filtre de couvercle (7) étant en contact avec une surface de la nervure de fixation (2) en longueur, et le couvercle arrière (4) étant en contact avec une autre surface de la nervure de fixation (2) en longueur.
